# EUROPEAN PATENT SPECIFICATION

(11) **EP 1 488 162 B1**
(45) Date of publication and mention of the grant of the patent: **28.02.2007**
(21) Application number: 03744944.4
(22) Date of filing: 18.03.2003
(51) Int. Cl.: F16L 59/02, E04B 1/76

(54) **THERMAL INSULATING SYSTEM WITH CORROSION RESISTANCE, WATERPROOFING AND SOUNDPROOFING PROPERTIES**
WÄRMEISOLATIONSSYSTEM MIT KORROSIONSWIDERSTANDS-, WASSERABDICHTUNGS- UND SCHALLDÄMMUNGSEIGENSCHAFTEN
SYSTEME D'ISOLATION THERMIQUE PRESENTANT UNE RESISTANCE A LA CORROSION ET DES PROPRIETES D'ETANCHEITE A L'EAU ET D'INSONORISATION

(30) Priority: 25.03.2002 IT BA20020011
(43) Date of publication of application: 22.12.2004
(73) Proprietor: Isolcover Impianti S.r.l., 72100 Brindisi (IT)
(72) Inventor: CARDETTA, Franco, I-74100 Taranto (IT)
(86) International application number: PCT/IB2003/001037
(87) International publication number: WO 2003/081119

(56) References cited:
- EP-A- 0 806 599
- NL-C- 133 509
- US-A- 4 539 055
- US-A- 5 401 310

## Description

### Technical field

The present invention relates to a thermal insulating system with corrosion resistance, waterproofing and soundproofing properties, suitable for pipelines and for surfaces of any kind and shape (cylindrical, flat, etc.), and metal/concrete roofs; comprising panels and/or cupels and/or mats made of rock wool, glass wool, ceramic fiber (or any other proper insulating material) and a glass cloth. Said glass cloth is impregnated with a waterproof elastic stucco. This product can have any composition or, according to a preferential embodiment, a particular composition as brought in the chart of the table 1.

The object of the present invention relates to insulating, waterproofing and soundproofing coatings for pipelines and surfaces of any kind. As known, such coatings are made of materials with thermal insulation properties, like rock wool, glass wool, ceramic fibers, calcium silicate panels, cork and other similar materials, which are wrapped around or laid on the the surfaces to be insulated, by means of suitable fixing and of refolded and overlapped metal sheets.

The known applications present many drawbacks:
a) a thicker layer of insulating material is needed to keep the external temperatures below 50-55°C; thus requiring more material;
b) the traditional insulating systems produce resonance due to the empty space between the insulating material and the insulated surface;
c) lower corrosion resistance compared with the present system that, thanks to anti-UV treated waterproofing stucco or the elastomeric liquid material, ensures a higher waterproofing duration;
d) the metal sheet does not avoid the formation of condensation inside the coating.

### Disclosure of the invention

The invention as defined in claim 1 is characterized in that its original composition confers a number of advantages over the common coatings available in market.

The use of a glass cloth, impregnated with stucco instead of refolded metal sheet, avoids condensation inside the coating and improves the waterproofing property.

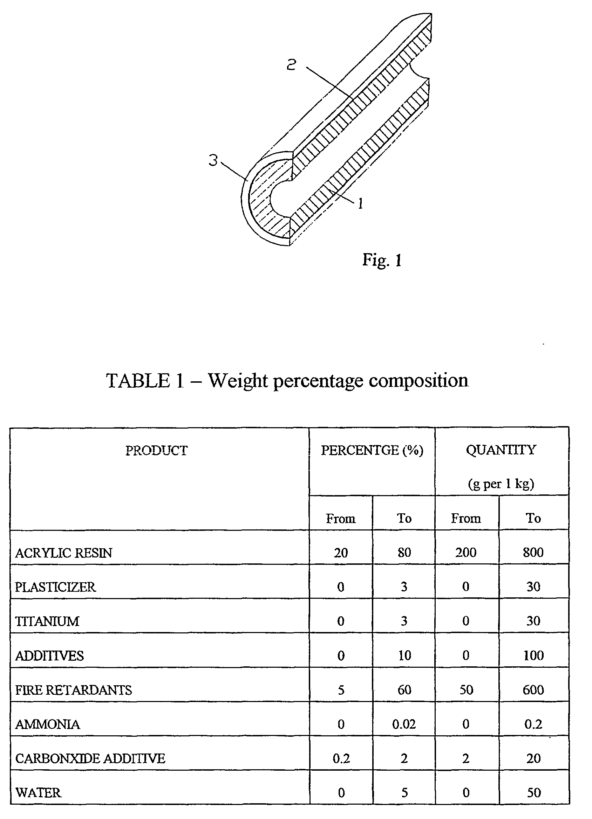

These and other advantages will be pointed out in the detailed description of the invention that will refer to the table 1 in which a stucco composition and a preferred embodiment of the invention (Fig. 1) are proposed. Both are examplifying and not restrictive.

### Way of carrying out the invention

The present insulating system is made of a base of fiber (1), like glass wool, rock wool, ceramic fiber or other insulating material, shaped as panels and/or cupel and/or mates and/or staples, and of a cloth (2) in natural or artificial fabric wrapped around such base. According to a not restrictive example of carrying out, the thickness of the cloth, to be wrapped around the base (1), varies from 0.5 to 2 mm. Said cloth is impregnated with stucco (3) of any composition or (always according to a preferred embodiment) a particular composition as the one presented in the chart of table 1. To soundproof, the final layer is made of a glass cloth or polyamidic cloth (or similar), and impregnated with a varnish based on acrylic, styrol-acrylic, polyurethanic and/or epoxi-polyurethanic resins, additivated with metallic or elastomeric charges. The thickness of application is between 0,5 and 2 mm. On top of this layer, another layer will be applied, made of glass cloth or polyamidic cloth or similar, impregnated with a substance something like stucco; said stucco are made of acrylic, styrol-acrylic, polyurethanic and/or epoxi- polyurethanic resins, having elastic properties, and contains a special additive (named CARBONXIDE); said additive being described and claimed in the US Patent No. 08/161.518, dated 12-06-93. According to a preferred but not restricting way of carrying out, the insulating system is shaped like a pipe, a pipe segment or a half cylinder. The stucco is made of binding material or any kind of carrier, like polyurethanic, acrylic, styrol-acrylic, epoxi-polyurethanic, epoxi-vinylic and other resins, in percentage between 20% and 80%. Moreover, such insulating system is very easy to apply on any kind of material, simply by glueing and impregnating.

Thanks to its high emissivity coefficient, said insulating system can reduce the external contact temperature of 30% and avoid the typical condensation effect. Thanks to the stucco or to the liquid elastomeric sheath, this insulating system has also high elasticity and excellent waterproofing and fixing properties. As already said, the stucco comprise a special additive (named CARBONXIDE), which gives the final product excellent structural characteristics and micro- porosity. Such microstructure reduces remarkably the plasticizers migration, and provides an oustanding resistance to UV-rays, a higher waterproofing and, consequently, a higher elasticity in time.

Summarizing, the advantages of the present invention are the following: temperature reduction on the external insulated surface; a very high resistance to UV-rays and air, industrial and sea pollutions; a very long lifetime without any maintenance; positive environmental impact; easy to apply; very high elasticity in time; available in any colour; it fits to any movement of the base without breaking; absence of solvents; good chemical resistance to alkaline solutions; very good waterproofing properties; almost no condensation inside the coating.

## Claims

1. Insulating system with corrosion resistance, waterproofing and soundproofing properties, suitable for pipelines and for surfaces of any kind and shape (cylindrical, flat, etc.), and metal/concrete roofs; comprising a base of fiber, like rock wool, glass wool, ceramic fiber (or any other proper insulating material); said base shaped as panels and/or cupel and/or mats and/or staples, and having at least a glass cloth (in natural or artificial fabric) wrapped around it. Said glass cloth, impregnated with a waterproof elastic stucco, **characterized by** the fact that said stucco has a special composition according to the one in the following table 1.
**TABLE 1 - Weight percentage composition**
| **PRODUCT** | **PERCENTGE (%)** | | **QUANTITY (g per 1 kg)** | |
|---|---|---|---|---|
| | **From** | **To** | **From** | **To** |
| **ACRYLIC RESIN** | 20 | 80 | 200 | 800 |
| **PLASTICIZER** | 0 | 3 | 0 | 30 |
| **TITANIUM** | 0 | 3 | 0 | 30 |
| **ADDITIVES** | 0 | 10 | 0 | 100 |
| **FIRE RETARDANTS** | 5 | 60 | 50 | 600 |
| **AMMONIA** | 0 | 0.02 | 0 | 0.2 |
| **CARBONXIDE ADDITIVE** | 0.2 | 2 | 2 | 20 |
| **WATER** | 0 | 5 | 0 | 50 |

2. Insulating system according to the claim 1, wherein said stucco is made of binding material or any kind of carrier, like polyurethanic, acrylic, styrol-acrylic, epoxi-polyurethanic, epoxi-vinylic and other resins, in percentage between 20% and 80%.

3. Insulating system according to the claims 1 or 2, wherein said stucco contains a special additive; said additive being described and claimed in the US Patent No. 08/161.518, dated 12-06-93.

4. Insulating system according to one of the claims from 1 to 3, **characterized by** the fact that the cloth thickness (to be wrapped around the base fiber) is comprised between 0.5 a 2 mm.

5. Insulating system according to one of the previous claims, **characterized in that** it is very easy to apply on any kind of material simply by glueing and impregnating it.

## Patentansprüche

1. Isoliersystem mit Korrosionsbeständigkeit, wasserfesten und schalldichten Eigenschaften, geeignet für Rohrleitungen und für Oberflächen jeder beliebigen Art und Form (zylindrisch, flach usw.) und Metall-Betondächer; umfassend eine Basis aus Fasern wie Steinwolle, Glaswolle, keramische Faser (oder ein beliebiges anderes geeignetes Isoliermaterial); wobei die Basis als Platte und/oder Kupelle und/oder Matte und/oder Stapel geformt sein kann und um sie mindestens ein Glasgewebe (in Natur- oder Kunststoffgewebe) gewickelt ist. Wobei das Glasgewebe mit einem wasserfesten elastischen Stuck imprägniert ist, **dadurch gekennzeichnet, dass** der Stuck eine spezielle Zusammensetzung gemäß derjenigen in der folgenden Tabelle 1 aufweist.
**TABELLE 1 -Zusammensetzung in Gewichtsprozent**
| **PRODUKT** | **PROZENTANTEIL (%)** | | **MENGE (g pro 1 kg)** | |
|---|---|---|---|---|
| | **Von** | **Bis** | **Von** | **Bis** |
| **ACRYLHARZ** | 20 | 80 | 200 | 800 |
| **WEICHMACHER** | 0 | 3 | 0 | 30 |
| **TITAN** | 0 | 3 | 0 | 30 |
| **ZUSATZSTOFFE** | 0 | 10 | 0 | 100 |
| **FEUERSCHUTZMITTEL** | 5 | 60 | 50 | 600 |
| **AMMONIAK** | 0 | 0,02 | 0 | 0,2 |
| **KOHLENOXID-ZUSATZSTOFF** | 0.2 | 2 | 2 | 20 |
| **WASSER** | 0 | 5 | 0 | 50 |

2. Isoliersystem nach Anspruch 1, wobei der Stuck aus einem Bindematerial oder jeder beliebigen Trägerart wie Polyurethan-, Acryl-, Styrolacryl-, Epoxypolyurethan-, Epoxyvinyl- und anderen Harzen in einem Prozentanteil zwischen 20 % und 80 % gefertigt ist.

3. Isoliersystem nach Anspruch 1 oder 2, wobei der Stuck einen speziellen Zusatzstoff enthält, wobei der Zusatzstoff in US-Patentschrift Nr. 08/161.518 vom 06. 12. 1993 beschrieben und beansprucht ist.

4. Isoliersystem nach einem der Ansprüche 1 bis 3, **dadurch gekennzeichnet, dass** die Dicke des Gewebes (das um die Basisfaser gewickelt werden soll) zwischen 0,5 und 2 mm beträgt.

5. Isoliersystem nach einem der vorhergehenden Ansprüche, **dadurch gekennzeichnet, dass** es auf jede beliebige Materialart durch Kleben und Imprägnieren leicht aufzubringen ist.

## Revendications

1. Système isolant doté de propriétés de résistance à la corrosion, d'imperméabilité et d'insonorisation, approprié pour des canalisations et pour des surfaces d'un type et d'une forme quelconques (cylindrique, plate, etc.), et pour des toits en métal/béton ; comprenant une base de fibre, comme de la laine minérale, de la laine de verre, des fibres de céramique (ou un autre matériau isolant approprié quelconque) ; ladite base étant formée comme des panneaux et/ou une coupelle et/ou des tapis et/ou des agrafes, et présentant au moins une toile de verre (en tissue naturel ou artificiel) enveloppée autour d'elle. Ladite toile de verre, imprégnée de stuc élastique imperméable, étant **caractérisée par le fait que** ledit stuc présente une composition spéciale selon celle du tableau 1 suivant.
**TABLEAU 1- Composition en pourcentage en poids**
| **PRODUIT** | **POURCENTAGE (%)** | | **QUANTITÉ (g pour 1 kg)** | |
|---|---|---|---|---|
| | **De** | **À** | **De** | **À** |
| **RÉSINE ACRYLIQUE** | 20 | 80 | 200 | 800 |
| **PLASTIFIANT** | 0 | 3 | 0 | 30 |
| **TITANE** | 0 | 3 | 0 | 30 |
| **ADDITIFS** | 0 | 10 | 0 | 100 |
| **PRODUITS IGNIFUGES** | 5 | 60 | 50 | 600 |
| **AMMONIAC** | 0 | 0,02 | 0 | 0,2 |
| **ADDITIF CARBOXYDE** | 0,2 | 2 | 2 | 20 |
| **EAU** | 0 | 5 | 0 | 50 |

2. Système isolant selon la revendication 1, dans lequel ledit stuc est fabriqué dans un matériau de liaison ou un type quelconque de support, tel que des résines polyuréthanique, acrylique, styrol-acrylique, époxy-polyuréthanique, époxy-vinylique et autre, dans un pourcentage entre 20 % et 80 %.

3. Système isolant selon la revendication 1 ou la revendication 2, dans lequel ledit stuc contient un additif spécial ; ledit additif étant décrit et revendiqué dans le brevet américain n° 08/161 518, date du 12/06/93.

4. Système isolant selon l'une des revendications 1 à 3, **caractérisé par le fait que** l'épaisseur de la toile (à envelopper autour de la base de fibre) est comprise entre 0,5 et 2 mm.

5. Système isolant selon l'une quelconque des revendications précédentes, **caractérisé en ce qu'**il est très facile à appliquer sur un type quelconque de matériau simplement par son collage ou imprégnation.
